# EUROPÄISCHE PATENTANMELDUNG

(11) **EP 3 109 058 A2**
(43) Veröffentlichungstag der Anmeldung: **28.12.2016**
(21) Anmeldenummer: 15185922.0
(22) Anmeldetag: 18.09.2015
(51) Int. Cl.: B41M 5/24

(54) **VERFAHREN ZUR MARKIERUNG VON WERKSTÜCKEN UND MARKIERTES WERKSTÜCK**

(30) Priorität: 26.06.2015 EP 15174086
(71) Anmelder: Fraunhofer-Gesellschaft zur Förderung der angewandten Forschung e.V., 80686 München (DE)
(72) Erfinder: Härtling, Thomas, 01239 Dresden (DE); Zeh, Christoph, 01277 Dresden (DE)
(74) Vertreter: Epping - Hermann - Fischer

(57) **Zusammenfassung**

Pulverförmige Leuchtstoffe welche eine Lumineszenz nach ultravioletter Lichtanregung (Fluoreszenz) oder nach infraroter Lichtanregung (Aufkonversion) aufweisen werden auf zu markierende Bauteile, Halbzeuge oder Produkte aufgebracht, beispielsweise gedruckt, gesprüht oder gestrichen. Die Haftung der Leuchtstoffe wird durch Laserbehandlung, insbesondere Gravur und/oder oberflächliches örtliches oder flächiges Aufschmelzen erhöht, sodass die Nutzbarkeit der Markierung auch bei nachfolgenden Bearbeitungsschritten erhalten bleibt. Vorzugsweise sind die Leuchtstoffe sehr temperaturstabil (Erhalt der Leuchtkraft bis zu 1700°C), chemisch inert und nicht korrosiv.

## Beschreibung

Es wird ein Verfahren, insbesondere ein laserbasiertes Verfahren, zur Markierung von Werkstücken angegeben. Darüber hinaus wird ein entsprechend markiertes Werkstück angegeben.

Eine zu lösende Aufgabe besteht darin, ein Verfahren anzugeben, mit dem Werkstücke maschinenlesbar und prozesssicher markierbar sind.

Diese Aufgabe wird unter anderem durch ein Verfahren mit den Merkmalen des Patentanspruchs 1 gelöst. Bevorzugte Weiterbildungen sind Gegenstand der übrigen Ansprüche.

Gemäß zumindest einer Ausführungsform des Verfahrens umfasst dieses den Schritt des Bereitstellens eines Werkstücks. Bei dem Werkstück kann es sich um einen Rohling und/oder um einen Grundkörper handeln. Beispielsweise umfasst oder besteht das Werkstück aus einem oder mehreren der nachfolgend genannten Materialien: Metall wie Eisen oder Stahl oder Aluminium, Glas, Kunststoff wie PMMA oder PC, Keramik wie Aluminiumoxid. Das Werkstück kann beim Bereitstellen etwa in Gestalt einer Folie, einer Platte oder eines Blechs vorliegen. Bevorzugt wird in nachfolgenden, späteren Verfahrensschritten die Gestalt des Werkstücks verändert.

Gemäß zumindest einer Ausführungsform weist das Werkstück eine Oberfläche auf. Die Oberfläche umfasst, in Draufsicht gesehen, mindestens einen Markierbereich. Zumindest in dem Markierbereich kann es sich bei der Oberfläche, jedenfalls beim Bereitstellen des Werkstücks, um eine gerade, ebene Fläche handeln. Es ist möglich, dass in späteren Verfahrensschritten die Form der Oberfläche in dem Markierbereich verändert wird.

Gemäß zumindest einer Ausführungsform wird in dem Markierbereich mindestens ein Leuchtstoff oder zumindest eine Leuchtstoffmischung aufgebracht. Bevorzugt wird der Markierbereich dabei vollständig von dem mindestens einen Leuchtstoff bedeckt, insbesondere homogen und unstrukturiert. Alternativ ist es möglich, dass unterschiedliche Teilgebiete in dem Markierbereich mit verschiedenen Leuchtstoffen versehen werden, sodass in den Teilgebieten unterschiedliche Lumineszenzeigenschaften vorliegen können.

Gemäß zumindest einer Ausführungsform umfasst das Verfahren den Schritt des Erzeugens einer Markierung in dem Markierbereich. Die Markierung ist besonders bevorzugt maschinenlesbar. Es ist möglich, dass die Markierung zumindest zeitweise auch von einem Betrachter ohne technische Hilfsgeräte ausgelesen werden kann.

Gemäß zumindest einer Ausführungsform wird beim Erzeugen der Markierung die Oberfläche des Werkstücks in dem Markierbereich zumindest stellenweise verändert und/oder abgetragen. Beispielsweise wird beim Erzeugen der Markierung eine Farbe der Oberfläche lokal verändert. Alternativ oder zusätzlich wird durch Materialabtragung ein Relief in der Oberfläche erzeugt. Über die Farbveränderung und/oder die Materialabtragung wird gegenüber verbleibenden, nicht behandelten Bereichen der Oberfläche im Markierbereich ein optischer oder haptischer Kontrast erzeugt, über den die Maschinenlesbarkeit realisierbar ist.

Gemäß zumindest einer Ausführungsform wird mit dem Erzeugen der Markierung eine Strukturierung des Leuchtstoffs vorgegeben. Mit anderen Worten ist es möglich, dass die Markierung sich in dem Leuchtstoff als Positiv oder als Negativ wiederfindet. Hierzu können zusätzliche Verfahrensschritte beitragen. Jedoch wird die spätere Geometrie der Strukturierung, mit der der Leuchtstoff in dem Markierbereich bei der fertigen Markierung verbleibt, deterministisch und eindeutig mit der Bearbeitung der Oberfläche beim Erzeugen der maschinenlesbaren Markierung vorgegeben.

Die Markierung und der Markierbereich sind bevorzugt frei von zusätzlich aufgetragenen Farben. Das heißt, die Markierung ist dann ausschließlich durch die Materialveränderung des Werkstücks, also Oberflächenmodifikation und/oder Materialabtrag, zusammen mit dem strukturierten Leuchtstoff gebildet.

In mindestens einer Ausführungsform dient das Verfahren zur Markierung von Werkstücken und umfasst zumindest die folgenden Schritte:
A) Bereitstellen eines Werkstücks mit einer Oberfläche, wobei die Oberfläche in Draufsicht gesehen einen Markierbereich aufweist,
B) Aufbringen zumindest eines Leuchtstoffs in dem Markierbereich,
C) Erzeugen einer maschinenlesbaren Markierung in dem Markierbereich (12), sodass die Oberfläche stellenweise verändert und/oder abgetragen wird,
wobei mit dem Schritt C) eine Strukturierung des Leuchtstoffs vorgegeben wird, sodass der Leuchtstoff zumindest zeitweilig entsprechend der Markierung an dem Werkstück verbleibt. Gemäß zumindest einer Ausführungsform erfolgt das Erzeugen der Markierung mittels Laserbeschriftung, Lasergravur, Nadelgravur, Ätzen oder Molettieren. Bevorzugt wird Laserbeschriftung oder Lasergravur verwendet.

Bei der Herstellung von Halbzeugen, Bauteilen oder Produkten werden diese gemäß des Stands der Technik häufig mit einer eindeutigen, individuellen Markierung versehen, um eine Rückverfolgbarkeit im Betrieb bzw. auch durch den gesamten Herstellungsprozess zu ermöglichen - idealerweise lückenlos bis zum Ausgangsmaterial. Als Stand der Technik kommen als Markierungen zum Beispiel Barcodes, QR-Codes oder Data-Matrix-Codes zum Einsatz. Entsprechende Markierungen finden bevorzugt auch bei dem hier beschriebenen Verfahren Anwendung.

Für Bauteile aus Glas, Metall, Keramik, aber auch anderen Materialien, wird diese Markierung häufig in Form einer Lasergravur oder Nadelgravur ausgeführt. (Im Folgenden werden alle Betrachtungen für Lasergravuren gemacht, sie gelten jedoch in gleicher Weise für Nadelgravuren). Das Verfahren bietet den Vorteil, besonders dauerhafte Markierungen am Werkstück anbringen zu können. Außerdem können mittels Laser sehr hohe Auflösungen (zum Beispiel bis 10 µm Auflösung und kleiner) beim Schreiben des Codes erzeugt werden. Die Robustheit und hohe Auflösung der Lasergravur führt dazu, dass das Verfahren bevorzugt eingesetzt wird, wenn ein Bauteil extremen Prozess- oder Betriebsbedingungen ausgesetzt ist (etwa hohen Temperaturen, harschen Chemikalien, hohen Band- und somit Gravurgeschwindigkeiten). Eine Vielzahl von Lasergravur- und Lesesystemen sind bekannt und häufig fest zum Beispiel in Produktionsanlagen integriert.

Nachteilig wirkt sich bei Lasergravuren aus, dass der optische Kontrast zwischen erhabenen und tieferliegenden Bereichen der Gravur nicht hoch ist, so dass das Auslesen generell unter speziellen Beleuchtungsbedingungen (zum Beispiel seitliche Beleuchtung mit Schattenwurf) durchgeführt wird. Automatisierte Lesegeräte (Kamerasysteme) sind auf derartige spezielle Beleuchtungsbedingungen abgestimmt. Ändert sich der Kontrast, zum Beispiel durch Farbänderungen der Bauteiloberfläche im Zuge eines Produktionsprozesses, so sind die Beleuchtungs- und Kontrastbedingungen nicht mehr erfüllt und ein automatisiertes Auslesen ist mit aktuell verfügbaren Lesegeräten unter keinen Umständen mehr möglich. Ein Bespiel für eine solche extreme Kontraständerung ist das Erscheinen von Anlassfarben oder das Verzundern von Metallteilen bei Wärmebehandlung. Der Verlust der Lesbarkeit der ansonsten robusten Lasergravur führt dazu, dass die Rückverfolgbarkeit der markierten Objekte nicht mehr lückenlos erfolgen kann, sondern immer dort abbricht, wo Kontraständerungen durch Prozess- oder Betriebsbedingungen verursacht werden.

Die Aufgabe der Erfindung besteht daher insbesondere darin, den Kontrast von Lasergravuren zu erhöhen. Der erhöhte Kontrast soll dabei dauerhaft verfügbar sein, das heißt auch extreme Prozess- und Betriebsbedingungen wie hohe Temperaturen, harsche Chemikalien oder Umwelteinflüsse schadlos überstehen. Die Kontrasterhöhung sollte dabei möglichst einfach sein, so dass bestehende, bereits in Anlagen und Prozesse integrierte Gravursysteme weiterhin genutzt oder mit nur geringem Aufwand angepasst werden können.

Die Erhöhung des Kontrastes von Lasergravuren kann mit Hilfe keramischer Leuchtstoffe erfolgen (zum Beispiel dotierte Metalloxide, Lanthanoxide, Oxysulfide, Nitride und viele mehr).

Als Leuchtstoffe sind insbesondere die in EP 2 549 330 A1 (hier insbesondere Table 1 und 2, Absätze 0068, 0075 bis 0078 und im Anspruchssatz genannte Stoffe) offenbarten Stoffe verwendbar und/oder die in WO 2014/041264 A1 offenbarten Stoffe. Hinsichtlich der verwendeten Leuchtstoffe wird der Offenbarungsgehalt dieser Druckschriften durch Rückbezug mit aufgenommen.

Durch den zumindest einen Leuchtstoff ist ein Reflexionsgradunterschied und/oder Remissionsgradunterschied zwischen der Markierung und dem Rohling sowie dem Werkstück erhöhbar, insbesondere wenn der Leuchtstoff zur Fotolumineszenz angeregt wird. Leuchtstoffe können hierbei in spektralen Teilbereichen, in denen der Leuchtstoff über Fotolumineszenz emittiert, einen Reflexionsgrad von mehr als 100 % aufweisen. Ein über 100 % hinausgehender Reflexionsgrad ist somit durch das von dem Leuchtstoff erzeugte Sekundärlicht hervorgerufen.

Der zumindest eine Leuchtstoff oder die Leuchtstoffmischung enthält bevorzugt wenigstens einen der folgenden Leuchtstoffe oder besteht hieraus: Eu²⁺-dotierte Nitride wie (Ca,Sr)AlSiN₃:Eu²⁺, Sr(Ca,Sr)Si₂Al₂N₆:Eu²⁺, (Sr,Ca)AlSiN₃*Si₂N₂O:Eu²⁺, (Ca,Ba,Sr)₂Si₅N₈:Eu²⁺, (Sr,Ca)[LiAl₃N₄]:Eu²⁺; Granate aus dem allgemeinen System (Gd,Lu,Tb,Y)₃(Al,Ga,D)₅(O,X)₁₂:RE mit X = Halogenid, N oder zweiwertiges Element, D = drei- oder vierwertiges Element und RE = Seltenerdmetalle wie Lu₃(Al₁₋ₓGaₓ)₅O₁₂:Ce³⁺, Y₃(Al₁₋ₓGaₓ)₅O₁₂:Ce³⁺; Eu²⁺-dotierte Sulfide wie (Ca,Sr,Ba)S:Eu²⁺; Eu²⁺-dotierte SiONe wie (Ba,Sr,Ca)Si₂O₂N₂:Eu²⁺; SiAlONe etwa aus dem System LiₓM_{y}Ln_{z}Si₁₂₋₍ₘ₊ₙ₎Al₍ₘ₊ₙ₎OₙN₁₆₋ₙ; beta-SiAlONe aus dem System Si₆₋ₓAl_{z}O_{y}N_{8-y}:RE_{z}; Nitrido-Orthosilikate wie AE₂₋ₓ₋ₐREₓEuₐSiO₄₋ₓNₓ, AE₂₋ₓ₋ₐREₓEuₐSi_{1-y}O_{4-x-2y}Nₓ mit RE = Seltenerdmetall und AE = Erdalkalimetall; Orthosilikate wie (Ba,Sr,Ca,Mg)₂SiO₄:Eu²⁺; Chlorosilikate wie Ca₈Mg(SiO₄)₄Cl₂:Eu²⁺; Chlorophosphate wie (Sr,Ba,Ca,Mg)₁₀(PO₄)₆Cl₂:Eu²⁺; BAM-Leuchtstoffe aus dem BaO-MgO-Al₂O₃-System wie BaMgAl₁₀O₁₇:Eu²⁺; Halophosphate wie M₅(PO₄)₃(Cl,F): (*Eu*²⁺, Sb³⁺, Mn²⁺); SCAP-Leuchtstoffe wie (Sr,Ba,Ca)₅(PO₄)₃Cl:Eu²⁺. Außerdem können auch sogenannte Quantenpunkte als Konvertermaterial eingebracht werden. Quantenpunkte in der Form nanokristalliner Materialien, welche eine Gruppe II-VI-Verbindung und/oder eine Gruppe III-V-Verbindungen und/oder eine Gruppe IV-VI-Verbindung und/oder Metall-Nanokristalle beinhalten, sind hierbei bevorzugt.

Der zumindest eine Leuchtstoff kann zu einer Verkürzung der Wellenlänge einer Anregungsstrahlung, auch als Up conversion bezeichnet, eingerichtet sein und dann beispielsweise infrarotes Licht in sichtbares Licht umwandeln. Alternativ kann der Leuchtstoff kurzwelliges Licht in langwelliges Licht umwandeln. Ein Auslesen des Leuchtstoffs erfolgt bevorzugt im sichtbaren, im nahinfraroten oder im nahen ultravioletten Spektralbereich.

Gemäß zumindest einer Ausführungsform liegt der Leuchtstoff in Form von Leuchtstoffpartikeln vor. Die Partikel können in ein Matrixmaterial gebettet sein. Ein mittlerer Durchmesser der Partikel liegt zum Beispiel zwischen einschließlich 0,1 µm und 5 µm. Bei dem Matrixmaterial handelt es sich beispielsweise um ein lichtdurchlässiges, anorganisches Material, insbesondere um ein Glas auf Basis von Siliziumdioxid. Das Matrixmaterial kann als Haftvermittler und/oder als Klebstoff zwischen dem Werkstück und dem mindestens einen Leuchtstoff wirken. Ebenso kann es sich bei dem Matrixmaterial um ein lichtdurchlässiges, organisches Material handeln. Das organische Matrixmaterial beinhaltet dabei zum Beispiel ein Bindemittel und/oder ein organisches Lösungsmittel.

Diese pulverförmigen Leuchtstoffe zeigen eine ausgeprägte Lumineszenz nach ultravioletter Lichtanregung (Fluoreszenz) oder infraroter Lichtanregung (Aufkonversion). Die pulverförmigen Materialien lassen sich in Tinten oder Pasten verarbeiten und so auf zu markierende Bauteile, Halbzeuge oder Produkte gemäß der nachfolgenden Ausführungsbeispiel aufdrucken, aufsprühen oder aufstreichen. Sofern notwendig kann die Haftung der Leuchtstoffe mit verschiedenen ebenfalls in den nachfolgenden Ausführungsbeispielen dargelegten Verfahren verbessert werden. Die Leuchtstoffe sind hochgradig temperaturstabil (Erhalt der Leuchtkraft bis zu 1700°C), chemisch inert und nicht korrosiv. Zur Lösung der o.g. Aufgabe muss jedoch nicht nur der Erhalt der Leuchtkraft des Leuchtstoffs, sondern auch dessen Haftung auf dem zu markierenden Objekt sichergestellt werden.

Der Leuchtstoff/die Leuchtstofftinte kann mit Hilfe eines Inkjet-Druckers großflächig appliziert werden (etwa in dem Markierbereich mit beispielsweise einer Fläche von mindestens 1 cm x 1 cm). Der bedruckte Bereich wird anschließend so mit einem Laser bearbeitet, dass ein Codemuster (Barcode, 2-D-Code) durch Ablösen der vom Laser getroffenen Tintenbereiche in die bedruckte Fläche eingeschrieben wird. Weiterhin kann die bedruckte Fläche in ihrer Gesamtheit so mit dem Laser bearbeitet werden, dass ein Abplatzen der Markierung im Nachfolgenden Laserhärteprozess vermieden wird. Dazu wird die Fläche der verbleibenden Tinte mit dem Laser "perforiert", so dass die Markierung beim Härten nicht zu einer großen Fläche versintert, sondern individuelle Tinteninseln verbleiben. Für diese Inseln führt ein Unterschied in der thermischen Ausdehnung weniger schnell zum Abplatzen.

Gemäß zumindest einer Ausführungsform wird der Leuchtstoff zuerst ganzflächig aufgebracht und/oder mittels des Erzeugens der Markierung strukturiert, sodass vergleichsweise großflächige, zusammenhängende Leuchtstoffgebiete resultieren. Diese Leuchtstoffgebiete werden anschließend, beispielsweise durch Laserstrahlung oder durch mechanische Bearbeitung, zu den Inseln nachstrukturiert. Durch diese Nachstrukturierung bleibt jedoch besonders bevorzugt die durch die Markierung vorbestimmte, übergeordnete Struktur und Formgebung erhalten. Alternativ kann der Leuchtstoff gleich in Form der Inseln aufgebracht werden.

Gemäß zumindest einer Ausführungsform gilt für einen Quotienten k aus einer mittleren Dicke der Markierung und/oder der Inseln und einem mittleren Durchmesser der Inseln: k ≤ 0,02 oder k ≤ 0,05 oder k ≤ 0,2. Alternativ oder zusätzlich kann gelten: 10⁻⁴ ≤ k oder 10⁻³ ≤ k. Durch eine solche Wahl des Quotienten k können die Auswirkungen von Temperaturänderungen auf die Inseln und somit auf die Markierung gering gehalten werden.

Gemäß zumindest einer Ausführungsform gilt für einen Quotienten q aus einem mittleren Durchmesser der Inseln, in Draufsicht gesehen, und einem Längenausdehnungskoeffizienten des Werkstücks zumindest einer der folgenden Zusammenhänge: 0,1 K·m ≤ q oder 1 K·m ≤ q ≤ oder 5 K·m ≤ q und/oder q ≤ 10 K·m oder q ≤ 20 K·m oder q ≤ 80 K·m. Dabei liegt der Längenausdehnungskoeffizient beispielsweise in der Größenordnung von 10⁻⁵ 1/K.

Der mittlere Durchmesser der Inseln beträgt beispielsweise mindestens 5 µm oder 20 µm und/oder höchstens 400 µm oder 200 µm oder 100 µm oder 40 µm.

Gemäß zumindest einer Ausführungsform geht der Verfahrensschritt C) dem Verfahrensschritt B) voraus. In diesem Fall werden im Verfahrensschritt C) bevorzugt mehrere Vertiefungen in dem Werkstück erzeugt, wobei die Vertiefungen in dem Markierbereich liegen über die Vertiefungen die Markierung definiert ist. Im Schritt C) wird der Leuchtstoff bevorzugt ganzflächig in dem Markierbereich aufgebracht.

Gemäß zumindest einer Ausführungsform umfasst das Verfahren einen Schritt D). Der Schritt D) folgt bevorzugt dem Schritt B) nach. In dem Schritt D) wird der zuvor aufgebrachte Leuchtstoff teilweise wieder entfernt, speziell außerhalb der Vertiefungen. Das Entfernen von überzähligem Leuchtstoff erfolgt beispielsweise mit einer Rakel.

Gemäß zumindest einer Ausführungsform werden die Verfahrensschritte A), B), C) in dieser Reihenfolge durchgeführt. Das heißt, der Leuchtstoff wird bevorzugt ganzflächig in dem Markierbereich aufgebracht. Nachfolgend wird der Leuchtstoff bereichsweise entfernt, sodass der Leuchtstoff im Schritt C) nur außerhalb von Bereichen, in denen die Oberfläche verändert und/oder abgetragen wird, an dem Werkstück verbleibt. Mit anderen Worten wird der Leuchtstoff aus den Bereichen entfernt, die etwa durch Laserbestrahlung oder durch mechanische Bearbeitung im Schritt C) verfärbt werden oder in denen die Vertiefungen erzeugt werden.

Gemäß zumindest einer Ausführungsform wird eine Konzentration des Leuchtstoffs in der fertigen Markierung so eingestellt, sodass ein durch den Leuchtstoff hervorgerufener Reflexionsgradunterschied und/oder Remissionsgradunterschied besondere im Spektralbereich zwischen einschließlich 400 nm und 950 nm höchstens 1 Prozentpunkt oder 5 Prozentpunkte oder 10 Prozentpunkte beträgt. Dies gilt bevorzugt sowohl über diesen Spektralbereich gemittelt als auch bei jeder einzelnen Wellenlänge in diesem Spektralbereich. Das heißt etwa, bei einer Beleuchtung und/oder Beobachtung der Markierung in diesem Spektralbereich ist die Markierung dann nicht oder nur sehr schlecht erkennbar.

Mit anderen Worten ist dann der Leuchtstoff von einem Betrachter und/oder von einer Kamera ohne den Leuchtstoff zur Lichtemission anregender Beleuchtung nicht erkennbar. Der Leuchtstoff ist in diesem Fall nur mit entsprechender Beleuchtung aufgrund der Leuchtstofffotolumineszenz sichtbar. Die Fotolumineszenz kann dabei im sichtbaren Spektralbereich zwischen 400 nm und 780 nm oder im infraroten Spektralbereich liegen und von einem Betrachter und/oder von einer Kamera ohne weitere Hilfsmittel wahrgenommen werden.

Gemäß zumindest einer Ausführungsform wird der Leuchtstoff derart ausgewählt, sodass er nur mit UV-Strahlung unterhalb von 400 nm und/oder mit nahinfraroter Strahlung oberhalb von 780 nm oder 950 nm oder 1100 nm zur Fotolumineszenz anregbar ist. Dies bedeutet insbesondere, dass unter normalen Beleuchtungsbedingungen wie natürlichem Tageslicht und/oder künstlicher Beleuchtung wie durch Leuchtstofflampen der Leuchtstoff für einen Betrachter nicht sichtbar wird.

Gemäß zumindest einer Ausführungsform ist die Markierung unmittelbar nach dem Schritt C) oder unmittelbar nach dem Fertigstellen der Strukturierung des Leuchtstoffs anhand der Markierung sowohl mit als auch ohne Berücksichtigung des Leuchtstoffs maschinenlesbar. Mit anderen Worten wird die Maschinenlesbarkeit der Vertiefungen und/oder der Farbveränderung durch den Leuchtstoff nicht beeinträchtigt.

Gemäß zumindest einer Ausführungsform erfolgt nach dem Fertigstellen der Markierung und nach dem Strukturieren des Leuchtstoffs eine weitere Verarbeitung des Werkstücks. Beispielsweise wird das Werkstück in seiner geometrischen Form verändert und/oder das Werkstück ändert sein Aussehen etwa hinsichtlich einer Farbgebung, etwa durch Anlaufen oder Brünieren oder durch das Erzeugen einer Verzunderungsschutzschicht. Es ist möglich, dass nach dieser Bearbeitung des Werkstücks die Markierung nur noch aufgrund des strukturierten Leuchtstoffs maschinenlesbar ist. Mit anderen Worten bleibt die Maschinenlesbarkeit der Markierung lediglich durch den Leuchtstoff erhalten.

Gemäß zumindest einer Ausführungsform handelt es sich bei dem Werkstück um ein metallisches Werkstück. Insbesondere ist das Werkstück zumindest an der Oberfläche aus Eisen, Stahl, Titan, Chrom oder Aluminium.

Gemäß zumindest einer Ausführungsform umfasst das Verfahren einen Schritt E). Dieser Schritt E) folgt bevorzugt den Schritten B) und C) nach. In dem Schritt E) wird das Werkstück zumindest in dem Markierbereich stellenweise oder ganzflächig aufgeweicht oder angeschmolzen. Hierdurch ist erzielbar, dass der Leuchtstoff besser an dem Werkstück anhaftet. Beispielsweise sinkt der Leuchtstoff, der als freie Leuchtstoffpartikel oder als Leuchtstoffpartikel in einem Matrixmaterial vorliegen kann, teilweise in das Werkstück ein. Alternativ ist es möglich, dass das Matrixmaterial aufschmilzt oder anschmilzt und dass hierdurch die Anhaftung verbessert wird. Zusätzlich zu dem Anschmelzen und/oder Aufweichen kann Druck auf den Leuchtstoff ausgeübt werden.

Darüber hinaus wird ein markiertes Werkstück angegeben. Das Werkstück ist bevorzugt mit einem Verfahren hergestellt, wie in Verbindung mit einer oder mehrerer der oben genannten Ausführungsformen angegeben. Merkmale des Verfahrens sind daher auch für das Werkstück offenbart und umgekehrt.

In mindestens einer Ausführungsform weist das Werkstück eine Oberseite mit einem Markierbereich auf. In dem Markierbereich liegt eine maschinenlesbare Markierung vor, die zumindest einen Leuchtstoff beinhaltet. Die Markierung ist dabei ebenso durch eine stellenweise Veränderung der Oberfläche und/oder Abtragung von Material des Werkstücks in dem Markierbereich gebildet. Der Leuchtstoff ist in dem Markierbereich etwa als Positiv oder Negativ entsprechend der Veränderung und/oder Abtragung in dem Markierbereich vorhanden.

Gemäß zumindest einer Ausführungsform weist die Strukturierung des Leuchtstoffs eine Strukturgröße auf, die bei höchstens 100 µm oder 50 µm oder 25 µm liegt. Das heißt zum Beispiel, dass mindestens eine oder mehr als die Hälfte oder alle der Inseln, zu denen das mindestens eine Leuchtstoffgebiet strukturiert ist, einen mittleren Durchmesser mit den genannten Werten aufweisen. Für den mittleren Durchmesser D und eine Fläche A der entsprechenden Insel, in Draufsicht gesehen, gilt dabei bevorzugt: D = 2 (A/π)^{1/2}.

Gemäß zumindest einer Ausführungsform weist die Strukturierung des Leuchtstoffs eine Formgenauigkeit auf, die bei 100 µm oder weniger oder bei 20 µm oder weniger oder bei 10 µm oder weniger oder bei 5 µm oder weniger liegt. Der Begriff Formgenauigkeit bezeichnet dabei beispielsweise eine erzielbare minimale Abweichung von einer Sollform, etwa eine Kantenrauigkeit, wenn es sich bei der Sollform um eine gerade Linie handelt.

Nachfolgend werden ein hier beschriebenes Verfahren und ein hier beschriebenes Werkstück unter Bezugnahme auf die Zeichnung anhand von Ausführungsbeispielen näher erläutert. Gleiche Bezugszeichen geben dabei gleiche Elemente in den einzelnen Figuren an. Es sind jedoch keine maßstäblichen Bezüge dargestellt, vielmehr können einzelne Elemente zum besseren Verständnis übertrieben groß dargestellt sein.

Es zeigen:
- Figuren 1 und 2: Ausführungsbeispiele von Schritten von hier beschriebenen Verfahren zur Herstellung von hier beschriebenen markierten Werkstücken in schematischen Schnittdarstellungen,
- Figuren 3 bis 5: schematische Schnittdarstellungen von Ausführungsbeispielen von hier beschriebenen markierten Werkstücken, und
- Figuren 6 bis 9: schematische Draufsichten auf Ausführungsbeispiele von hier beschriebenen markierten Werkstücken.

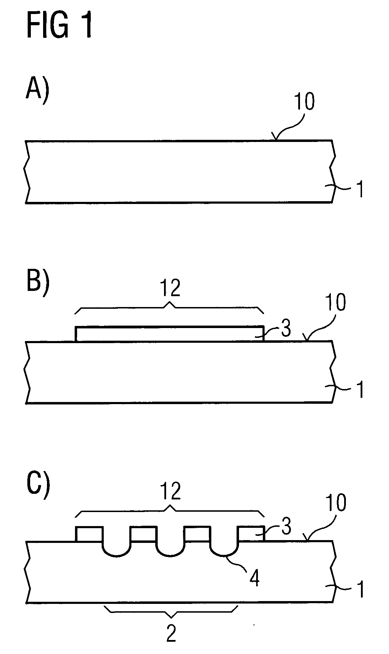

In Figur 1 ist ein Ausführungsbeispiel eines Herstellungsverfahrens für ein markiertes Werkstück 1 angegeben.

Eine Möglichkeit zur Verstärkung des Kontrasts von Lasergravuren (zum Beispiel Data-MatrixCodes) besteht darin, den zu gravierenden Bereich vor dem Gravurvorgang großflächig in einem Schritt mit einer Leuchtstofftinte oder -paste zu bedrucken, besprühen oder andersartig zu beschichten. Die Lasergravur wird dann in die Bauteiloberfläche durch die Bedruckung hindurch geschrieben. Auf diese Weise verbleiben auf den erhabenen Stellen der Gravur Leuchtstoffpartikel, auf den tieferliegenden Stellen werden diese durch den Laser abgetragen. Während des Leseprozesses wird die Markierung je nach verwendetem Leuchtstoff mit UV- oder IR-Licht bestrahlt; die Emission der verbliebenen Leuchtstoffpigmente führt dann zu deutlich erhöhtem Kontrast, unabhängig von einem Beleuchtungs- oder Lesewinkel. Gleichzeitig bleibt die Gravur gemäß des Standes der Technik erhalten; es wird also nicht nur eine Markierung in die Leuchtstoffbeschichtung, sondern auch in die Tiefe der Bauteiloberfläche geschrieben.

Wie in Figur 1A gezeigt, wird das Werkstück 1 mit einer Oberseite 10 bereitgestellt. Bei dem Werkstück 1 handelt es sich beispielsweise um ein Stahlblech. Nachfolgend wird, siehe Figur 1B, in einem Markierbereich 12 der Leuchtstoff 3 ganzflächig und durchgehend aufgebracht. Daraufhin werden, siehe Figur 1C, Vertiefungen 4 erzeugt, die die Gravur bilden. Der Leuchtstoff 3 verbleibt in dem Markierbereich 12 nur außerhalb der Vertiefungen 4 an der Oberfläche 10. Damit wird die Markierung 2 durch die Vertiefungen 4 zusammen mit dem verbleibenden Leuchtstoff 3 gebildet.

Wie auch in allen anderen Ausführungsbeispielen weisen die Vertiefungen 4 zum Beispiel eine mittlere Tiefe von mindestens 0.1 µm oder 1 µm oder 5 µm auf. Alternativ oder zusätzlich liegt die mittlere Tiefe bevorzugt bei höchstens 20 µm oder 100 µm oder 200 µm. Die Markierung 2 ist gemäß Figur 1 als Strichcode ausgeführt. Alternativ kann die Markierung 2 auch etwa als Punktcode oder Matrixcode oder als Schriftzug ausgebildet sein. Der Markierbereich 12 weist beispielsweise eine Fläche von mindestens 0,1 cm² oder 0,5 cm² und/oder von höchstens 100 cm² oder 50 cm² auf.

Weitere Verfahrensschritte zur Bearbeitung des Werkstücks 1 sind in den Figuren jeweils nicht dargestellt. Beispielsweise kann in weiteren, nicht gezeichneten Verfahrensschritten das Werkstück 1 inklusive der Markierung 2 verformt werden. Insbesondere bei einer Verformung des Werkstücks 1 können erhöhte Temperaturen auftreten, die auch zu einer Verfärbung der Oberfläche 10 des Werkstücks führen können.

Wie auch in allen anderen Ausführungsbeispielen ist es optional möglich, zusätzlich die Haftung der verbliebenen Leuchtstoffpigmente 3 auf der Bauteiloberfläche 10 in einem weiteren Prozessschritt nach dem Gravieren der Markierung 2 zu verstärken. Dazu kann zum Beispiel die Bauteiloberfläche 10 durch die Leuchtstofftinte hindurch mittels Laser aufgeschmolzen werden, woraufhin die Leuchtstoffpigmente 3 fest in die Bauteiloberfläche 10 inkorporiert werden. Für diese Ausführung werden vorteilhafterweise Leuchtstoffpigmente 3 oder Zusätze für Tinte/Paste gewählt, welche eine höhere Schmelztemperatur als die Bauteiloberfläche 10 aufweisen. Das Aufschmelzen der Bauteiloberfläche 10 oder ein Versintern der verbliebenen Leuchtstoffpigmente 3 kann auch ohne Laser in einem weiteren Prozessschritt, zum Beispiel während einer ohnehin durchzuführenden Wärmebehandlung des gesamten Bauteils 1, erfolgen.

Eine Konzentration des Leuchtstoffs 3 kann so gewählt sein, dass der Leuchtstoff 3 mit bloßem Auge anhand eines veränderten Farbeindrucks der Oberfläche 10 erkennbar ist. Die Konzentration der verdruckten Leuchtstoffpigmente 3 ist jedoch besonders bevorzugt so gering, dass die Bedruckung mit bloßem Auge oder Kamerasystemen ohne IR- oder UV-Beleuchtung nicht sichtbar ist. Somit wirkt die Leuchtstoffbeschichtung 3 beim Gravurprozess aufgrund nur sehr geringer Änderung der optischen Eigenschaften der Bauteiloberfläche 10 nicht störend. Weiterhin ist ohne UV- oder IR-Anregung lediglich die Markierung 2 (also insbesondere die Gravur) gemäß des Standes der Technik zu sehen.

Somit werden bestehende Lesesysteme gemäß des Standes der Technik zur Erfassung der Markierung 2 (ohne IR- oder UV-Anregung) bei ausreichend gutem visuellen Kontrast der Markierung 2 nicht gestört. Sobald die Oberfläche 10 des Bauteils 1 durch einen Bearbeitungsprozess so verändert wurde, dass ein rein visuelles Auslesen aufgrund eines Kontrastverlustes nicht mehr möglich ist, erlaubt selbst eine sehr geringe Pigmentkonzentration des Leuchtstoffs 3 aufgrund der sehr hohen Kontrastgenerierung nach IR- oder UV-Anregung ein automatisiertes Auslesen. Ein solches Vorgehen ist mit der Nutzung farbiger (nicht leuchtstoffhaltiger) Tinten nicht möglich, da im Fall niedriger Pigmentkonzentrationen kein ausreichender Kontrast mehr generiert werden kann.

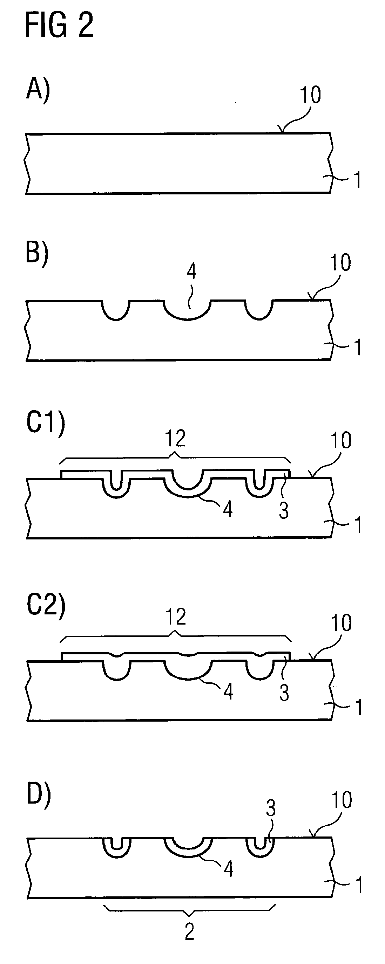

In Figur 2 ist ein weiteres Ausführungsbeispiel des Verfahrens dargestellt. In dieser Ausführung wird zunächst die Lasergravur 4 gemäß des Standes der Technik ausgeführt, siehe Figur 2B. Anschließend wird die Markierung 2 großflächig in einem Schritt mit einer Leuchtstofftinte oder -paste bedruckt, besprüht oder anderweitig beschichtet, siehe die Figuren 2C1 und 2C2. Direkt im Anschluss an diesen Vorgang wird das markierte Objekt so etwa an einem Rakel oder Schwamm vorbeigeführt, sodass die Leuchtstoffpigmente 3 von den erhabenen Stellen der Markierung 2 wieder entfernt werden, siehe Figur 2D. Dies erfolgt vorteilhafterweise, bevor die Tinte/Paste trocknet.

Das Entfernen der Leuchtstoffbeschichtung 3 auf den erhabenen Bereichen kann auch durch einen nachfolgenden abtragenden Bearbeitungsschritt (zum Beispiel Fräsen) erfolgen. In diesem Fall kann auch eine getrocknete Tinte abgetragen werden.

Zusätzlich kann, wie auch in allen anderen Ausführungsbeispielen, die Haftung der verbliebenen Leuchtstoffpigmente 3 in einem weiteren Prozessschritt nach dem Gravieren der Markierung 2 verstärkt werden. Dazu kann zum Beispiel die Bauteiloberfläche 10 durch die Drucktinte hindurch etwa mittels eines Lasers angeschmolzen oder aufgeschmolzen werden, woraufhin die Leuchtstoffpigmente 3 fest in die Bauteiloberfläche 10 inkorporiert werden. Für diese Ausführung werden vorteilhafterweise Leuchtstoffpigmente 3 oder Zusätze für die Tinte/Paste gewählt, welche eine höhere Schmelztemperatur als die Bauteiloberfläche 10 aufweisen. Das Aufschmelzen der Bauteiloberfläche oder ein Versintern der verbliebenen Leuchtstoffpigmente kann auch ohne Laser in einem weiteren Prozessschritt, zum Beispiel während einer ohnehin durchzuführenden Wärmebehandlung des gesamten Bauteils 1, erfolgen. Ebenso ist eine Umsetzung dieser Ausführung bevorzugt mit sehr geringer Pigmentkonzentration, wie vorhergehenden erläutert, möglich.

Der Leuchtstoff 3 kann dabei vergleichsweise dünn aufgetragen werden, wie in Figur 2C1 gezeigt. In diesem Fall füllt der Leuchtstoff 3 die Vertiefungen 4 nicht vollständig aus, vergleiche Figur 2D. Alternativ ist es möglich, dass der Leuchtstoff 3 in dem Markierbereich 12 relativ dick aufgetragen wird. Hierdurch ist es möglich, dass nach dem Abtragen des überzähligen Leuchtstoffs 3 die Vertiefungen 4 vollständig von dem Leuchtstoff 3 ausgefüllt sind, anders als in Figur 2D gezeichnet.

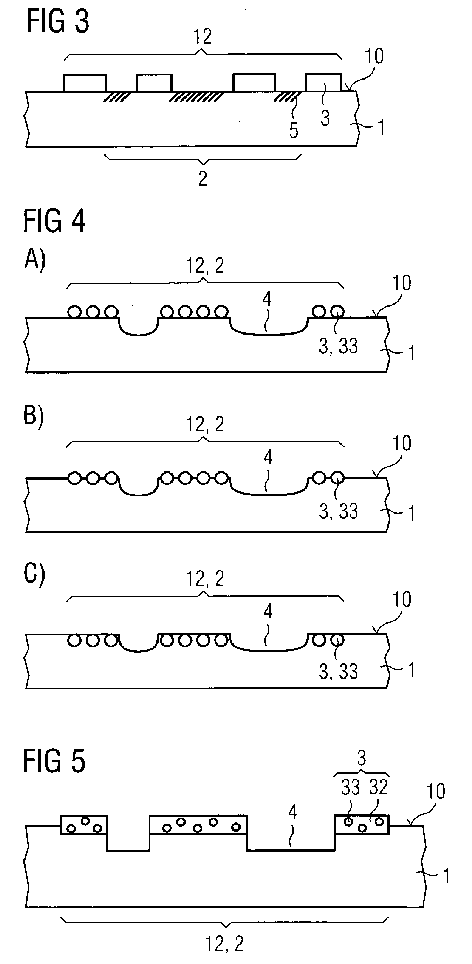

Beim Ausführungsbeispiel des markierten Werkstücks 1, wie in Figur 3 illustriert, erfolgt die Strukturierung des Leuchtstoffs 3 in dem Markierbereich 12 nicht durch das Erzeugen von Vertiefungen an der Oberfläche 10, sondern durch das Bilden von Verfärbungen 5. Beim Erzeugen der Verfärbungen 5 erfolgt kein oder kein signifikanter Materialabtrag. Die Verfärbungen 5 resultieren beispielsweise aus einer Änderung einer Materialzusammensetzung an der Oberfläche 10, etwa aufgrund von Oxidation oder Verkohlen. Mit anderen Worten verbleibt die Oberfläche 10 eben oder weitestgehend eben. Der Leuchtstoff 3 verbleibt nur in Bereichen an der Oberfläche 10, die nicht verfärbt sind. Bevorzugt wird der überzählige Leuchtstoff 3 gleichzeitig mit dem Erzeugen der Verfärbungen 5 entfernt.

In Figur 4 sind mehrere Varianten dargestellt, wie der Leuchtstoff 3 an der Oberfläche 10 angebracht sein kann. Gemäß Figur 4 liegt der Leuchtstoff 3 in Form von Partikeln 33 vor. Ein Matrixmaterial ist für den Leuchtstoff 3 hierbei nicht vorgesehen.

In Figur 4A dargestellt, liegen die Partikel 33 im Wesentlichen nur auf der Oberfläche 10 auf. Demgegenüber sind die Partikel 33 beim Ausführungsbeispiel der Figur 4B teilweise in die Oberfläche 10 eingedrückt. Laut Figur 4C sind die Partikel 33 vollständig oder überwiegend in dem Werkstück 1 versenkt, sodass die Leuchtstoffpartikel 33 bündig oder nahezu bündig mit verbleibenden Bereichen der Oberfläche 10 abschließen.

Diese in den Figuren 4A bis 4C dargestellten Varianten können auch bei Ausführungsbeispielen vorliegen, wie in Verbindung mit den Figuren 2D und 3 erläutert.

Gemäß Figur 5 ist der Leuchtstoff 3 durch ein Matrixmaterial 32 gebildet, in das die Leuchtstoffpartikel 33 eingebettet sind. Ein derartig aufgebauter Leuchtstoff 3 kann auch in den Ausführungsbeispielen der Figuren 1, 2 oder 3 vorliegen. Ebenso ist es möglich, dass ein derart aufgebauter Leuchtstoff 3, bestehend aus dem Matrixmaterial 32 und den Partikeln 33, lediglich auf der Oberfläche 10 aufgebracht ist oder bündig mit der Oberfläche 10 abschließt, analog zu den Figuren 4A und 4C.

In den Figuren 1, 2 und 4 sind die Vertiefungen 4 beispielsweise rund oder halbrund ausgebildet und weisen eine vergleichsweise unregelmäßige Form auf, im Querschnitt gesehen. Demgegenüber sind die Vertiefungen 4, wie in Figur 5 gezeigt, im Querschnitt gesehen rechteckig gestaltet und weisen eine regelmäßige Grundform auf. Die Vertiefungen 4 aus Figur 5 können auch in den Ausführungsbeispielen der Figuren 1, 2 oder 4 vorliegen und umgekehrt. Ebenso ist es möglich, dass die Markierung 2 sowohl Vertiefungen 4 etwa aus Figur 1 und auch aus Figur 5 beinhaltet.

Eine genaue Form der Vertiefungen 4, im Querschnitt gesehen, ist abhängig vom jeweils verwendeten Verfahren, mit dem die Vertiefungen 4 erzeugt werden. Aufgrund des Leuchtstoffs 3 ist eine genaue Morphologie der Vertiefungen 4 für einen Kontrast der Markierung 2 jedoch nicht maßgeblich. Durch die Vertiefungen 4 sind auch mechanische Spannungen auf die Markierung 2 reduzierbar, die sich bei Temperaturänderungen aufgrund unterschiedlicher thermischer Ausdehnungskoeffizienten der Markierung 2 und des Werkstücks 1 ergeben.

Anders als in den Figuren 1 bis 5 dargestellt ist es alternativ auch möglich, dass die Oberfläche 10 des Werkstücks 1 im Bereich der Markierung im Wesentlichen als ebene Fläche ohne signifikante Vertiefungen erhalten bleibt. In diesem Falle erfolgt dann praktisch nur ein Abtragen des Leuchtstoffs 3, nicht aber ein Materialabtrag aus dem Werkstück 1 heraus.

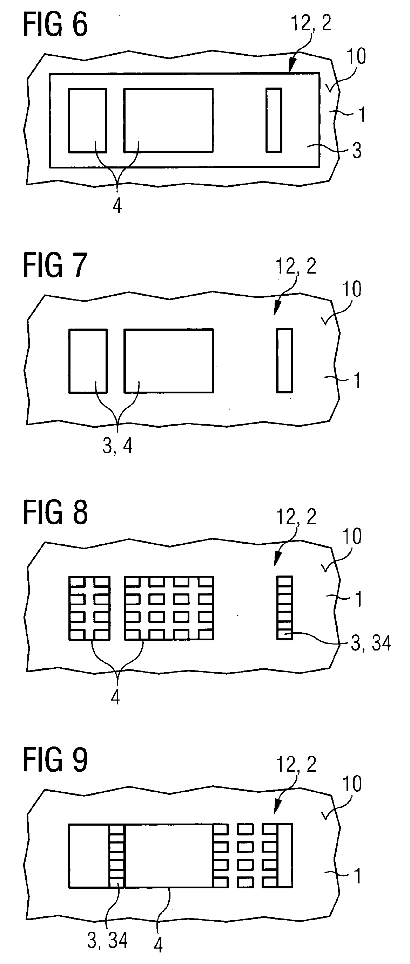

Beim Ausführungsbeispiel, wie in der Draufsicht in Figur 6 illustriert, ist die Markierung 2 in dem Markierbereich 12 durch mehrere der Vertiefungen 4 gebildet. Die Vertiefungen 4 Stellen beispielsweise einen Strichcode dar, können aber auch als eine andere Kodierung ausgestaltet sein. Der Leuchtstoff 3 umgibt die Vertiefungen 4, befindet sich jedoch nicht in den Vertiefungen 4. Mit anderen Worten stellt der Leuchtstoff 3 ein Negativ der Vertiefungen 4 dar. Dabei kann der Leuchtstoff 3 die Vertiefungen 4 ringsum und rahmenförmig umgeben.

Abweichend hiervon befindet sich der Leuchtstoff 3 beim Ausführungsbeispiel der Figur 7 nur in den Vertiefungen 4. Somit bildet der verbleibende Leuchtstoff 3 ein Positiv zu den Vertiefungen 4.

In Figur 8 ist ein weiteres Ausführungsbeispiel gezeigt. Zur Verbesserung der Haftung kann zusätzlich zu den Vorgängen wie dem Aufschmelzen der Oberfläche 10 oder dem Eindrücken des Leuchtstoffs 3 in das Werkstück 1 eine Perforierung der verbleibenden Leuchtstoffbeschichtung 3 erfolgen. Dies kann zum Beispiel mit Hilfe des Gravurlasers geschehen. Vorteilhafterweise verbleibt dabei keine geschlossene Schicht der Leuchtstofftinte 3 oder-paste, sondern es bilden sich kleinere Inseln 34, welche in ihrer Gesamtheit jedoch der Kontrastverstärkung der Markierung 2 dienen. Auf diese Weise wird der Effekt unterschiedlicher thermischer Ausdehnungskoeffizienten zwischen dem markierten Objekt, also dem Werkstück 1, und der Leuchtstoffbeschichtung 3 verringert, so dass in einer nachfolgenden Wärmebehandlung ein Abplatzen der Leuchtstoffbeschichtung 3 verhindert wird. Auch können durch eine Strukturierung zu solchen Inseln 34 mechanische Spannungen in der Markierung 2 reduziert werden, die durch Verunreinigungen und/oder Inhomogenitäten in einem Material der Markierung 2 hervorgerufen werden.

Dabei sind gemäß Figur 8 die Inseln 34 analog zur Figur 7 in den Vertiefungen 4 angebracht. In Draufsicht gesehen weisen die Inseln 34 einen quadratischen oder rechteckigen Grundriss auf und sind matrixförmige angeordnet. Abweichend hiervon können die Inseln 34 auch rund oder hexagonal gestaltet sein, in Draufsicht gesehen. Anders als in einem gezeigten quadratischen Gitter können die Inseln 34 in diesem Fall auch in einem hexagonal oder dreieckigen Gitter arrangiert sein. Die Anordnung der Inseln 34 kann auch in einem anderen Muster erfolgen, insbesondere wenn die Inseln 34 bereits beim Aufbringen des Leuchtstoffs 3 erzeugt werden und nicht durch nachträgliche Strukturierung erzeugt wurden. Für das Aufbringen des Leuchtstoffs 3 werden dann bevorzugt Tintenstrahl- oder Sprühverfahren verwendet.

Beim Ausführungsbeispiel der Figur 9 befinden sich die Inseln 34 zwischen den Vertiefungen 4, ähnlich zu Figur 6. Abweichend von Figur 6 befindet sich der Leuchtstoff 3 jedoch lediglich zwischen den Vertiefungen 4 und nicht vollständig um die Vertiefungen 4 herum. Dabei wird der Leuchtstoff 3 bevorzugt zuerst ganzflächig in dem Markierbereich 12 aufgebracht, anschließend anhand der Vertiefungen 4 strukturiert und erst nachfolgend zu den Inseln 34 geformt. Das Ausführungsbeispiel der Figur 6 kann entsprechend der Figur 9 modifiziert werden.

Für einen normgerechten 1D-Barcode müssen links und rechts von den eigentlichen Strichen noch Ruhezonen angebracht sein. Die Ruhezone muss eine der beiden Helligkeitsstufen oder Farben des ID-Codes aufweisen. Eine erste und eine letzte Zone des 1D-Codes muss dann die entgegengesetzte Helligkeit oder Farbe aufweisen. Daher enthalten die Ruhezonen, oder alternativ die erste und letzte Zone des 1D-Codes, ebenfalls den Leuchtstoff 3. Diese Zonen sind bevorzugt auch dementsprechend perforiert und/oder die Lasergravur wird auch im Bereich dieser Zonen durchgeführt. Für 2D-Codes müssen die Zonen analog zum 1D-Code an allen Seiten um den eigentlichen Code herum vorhanden sein. Solche Zonen sind in den Figuren zur Vereinfachung der Darstellung jeweils nicht gezeichnet, jedoch im Falle von normgerechten Codes in der Markierung 2 enthalten.
Innerhalb von Gebieten, in dem der Leuchtstoff 3 in dem Markierbereich 12 vorhanden ist, liegen die Leuchtstoffpartikel 33, in den Figuren 6 bis 9 nicht gezeichnet, bevorzugt jeweils statistisch verteilt vor.

Die Vorteile dieser Ausführungsformen bestehen unter anderem darin, dass die Gravur typischerweise mit beim Anwender vorhandener Hardware (Laser) durchgeführt werden kann. Die Gravur erfolgt - gegebenenfalls unter Anpassung von Prozessparametern - in bewährter Weise und kann an allen Stellen vor dem Ort/Prozess der Kontrastveränderung mit bestehenden Lesegeräten nach dem Stand der Technik erfasst werden. Erst nach dem Ort/Prozess der Kontraständerung (zum Beispiel Wärmebehandlung im Fall von Metallteilen) ist ein an den Leuchtstoff angepasstes Lesegerät notwendig. Auf diese Weise erfolgt eine vorteilhafte Kontrasterhöhung unter minimalem Eingriff in bestehende Systeme und unter minimalem Investitionsaufwand durch den Anwender. Gleichzeitig wird die hohe Auflösung der Lasergravur erhalten.

Außerdem erfolgt das Aufbringen der Leuchtstoff parallel für alle lateralen Bereiche der Markierung (das heißt nicht seriell Pixel für Pixel), so dass der Prozess der Bedruckung oder Beschichtung sehr schnell erfolgen kann. Bei der Verwendung von Leuchtstofftinten oder -pasten besteht gegenüber farbigen Tinten gemäß dem Stand der Technik der Vorteil der Temperaturfestigkeit bis 1700°C. Gegenüber der Verwendung keramikpigmenthaltiger (weißer) Tinten besteht der Vorteil, dass die Emissionsfarbe der Leuchtstoffe durch geeignete Leuchtstoffwahl an die im Prozess auftretende Verfärbung/Kontraständerung angepasst werden kann und weitestgehend unabhängig von der ursprünglichen Farbe der Oberfläche 10 des Werkstücks 1 ist.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezugszeichenliste

- 1: Werkstück
- 10: Oberfläche
- 12: Markierbereich
- 2: Markierung
- 3: Leuchtstoff
- 32: Matrixmaterial
- 33: Leuchtstoffpartikel
- 34: Insel
- 4: Vertiefung
- 5: Verfärbung

## Patentansprüche

1. Verfahren zur Markierung von Werkstücken (1) mit den Schritten:
A) Bereitstellen eines Werkstücks (1) mit einer Oberfläche (10), wobei die Oberfläche (10) in Draufsicht gesehen einen Markierbereich (12) aufweist,
B) Aufbringen zumindest eines Leuchtstoffs (3) in dem Markierbereich (12),
C) Erzeugen einer maschinenlesbaren Markierung (2) in dem Markierbereich (12), sodass die Oberfläche (10) stellenweise verändert und/oder abgetragen wird, wobei mit dem Schritt C) eine Strukturierung des Leuchtstoffs (3) vorgegeben wird, sodass der Leuchtstoff (3) zumindest zeitweilig entsprechend der Markierung (2) an dem Werkstück (1) verbleibt.

2. Verfahren nach dem vorhergehenden Anspruch,
bei dem im Schritt C) die Markierung (2) mittels Laserbeschriftung oder mittels Lasergravur erfolgt.

3. Verfahren nach einem der vorhergehenden Ansprüche,
bei dem der Verfahrensschritt C) dem Verfahrensschritt B) vorausgeht und im Schritt C) durch Lasergravur in dem Markierbereich (12) mehrere Vertiefungen (4) in das Werkstück (1) erzeugt werden und im Schritt B) der gesamte Markierbereich (12) mit dem Leuchtstoff (3) versehen wird, und
wobei in einem Schritt D), der dem Schritt B) nachfolgt, der Leuchtstoff (3) außerhalb der Vertiefungen (4) wieder entfernt wird.

4. Verfahren nach einem der Ansprüche 1 oder 2,
bei dem die Schritte A), B) und C) in dieser Reihenfolge durchgeführt werden,
wobei im Schritt B) der gesamte Markierbereich (12) mit dem Leuchtstoff (3) versehen wird, und
wobei im Schritt C) der Leuchtstoff (3) nur außerhalb von Bereichen, in denen die Oberfläche (10) verändert und/oder abgetragen wird, an dem Werkstück (1) verbleibt.

5. Verfahren nach einem der vorhergehenden Ansprüche,
bei dem eine Konzentration des Leuchtstoffs (3) in der fertigen Markierung (2) so eingestellt ist, dass ein durch den Leuchtstoff (3) hervorgerufener Remissionsgradunterschied bei Beobachtung im Spektralbereich zwischen einschließlich 400 nm und 950 nm höchstens 5 Prozentpunkte beträgt.

6. Verfahren nach einem der vorhergehenden Ansprüche,
wobei der Leuchtstoff (3) so gewählt wird, dass er nur mit Strahlung unterhalb von 400 nm und/oder oberhalb von 950 nm zur Fotolumineszenz anregbar ist.

7. Verfahren nach einem der vorhergehenden Ansprüche,
bei dem unmittelbar nach dem Schritt C) die Markierung (2) sowohl mit als auch ohne Berücksichtigung des Leuchtstoffs (3) maschinenlesbar ist,
wobei in einem nachfolgenden Verfahrensschritt der Werkstoff (1) derart bearbeitet wird, sodass die Markierung (2) nur noch mit Hilfe des Leuchtstoffs (3) maschinenlesbar ist.

8. Verfahren nach einem der vorhergehenden Ansprüche,
bei dem das Werkstück (1) aus einem oder mehreren Metallen ist oder ein oder mehrere Metalle umfasst,
wobei nach den Schritten B) und C) in einem Schritt F) eine Färbung der Oberfläche (10) verändert wird und nach dem Schritt F) die Markierung (2) aufgrund des Leuchtstoffs (3) noch maschinenlesbar ist.

9. Verfahren nach dem vorhergehenden Anspruch,
wobei das Metall entweder Eisen oder ein Stahl ist.

10. Verfahren nach einem der vorhergehenden Ansprüche,
wobei dem Verfahrensschritten B) und C) ein Schritt E) nachfolgt und in dem Schritt E) das Werkstück (1) zumindest im Markierbereich (12) angeschmolzen oder aufgeweicht wird, sodass der Leuchtstoff (3) teilweise in das Werkstück (1) einsinkt, um eine Anhaftung des Leuchtstoffs (3) an das Werkstück (1) zu verbessern.

11. Verfahren nach einem der vorhergehenden Ansprüche,
bei dem der Leuchtstoff (3) als Leuchtstoffpartikel (33) vorliegt, die in ein Matrixmaterial (32) eingebettet sind,
wobei der Leuchtstoff (3) im Schritt B) in Form einer Paste oder einer Tinte aufgebracht wird.

12. Verfahren nach einem der vorhergehenden Ansprüche,
bei dem der Leuchtstoff (3), optional zusammen mit dem Matrixmaterial (32), zu Inseln (34) strukturiert wird, wobei für einen Quotienten k aus einer mittleren Dicke der Inseln (34) und einem mittleren Durchmesser der Inseln (34) gilt: k ≤ 0,05.

13. Verfahren nach einem der vorhergehenden Ansprüche,
bei dem der Leuchtstoff (3) vor einem Fertigstellen und/oder Verbauen des Werkstücks (1) vollständig entfernt wird.

14. Verfahren nach einem der vorhergehenden Ansprüche,
bei dem der zumindest eine Leuchtstoff (3) ausgewählt ist aus der folgenden Gruppe: Eu²⁺-dotierte Nitride; Granate aus dem allgemeinen System (Gd, Lu, Tb, Y)₃(Al, Ga, D)₅(O, X)₁₂ : RE mit X = Halogenid, N oder zweiwertiges Element, D = drei- oder vierwertiges Element und RE = Seltenerdmetalle; Eu²⁺-dotierte Sulfide; Eu²⁺-dotierte SiONe; SiAlONe; beta-SiAlONe aus dem System Si₆₋ₓAl_{z}O_{y}N_{8-y}:RE_{z}; Nitrido-Orthosilikate;
Orthosilikate; Chlorosilikate; Chlorophosphate; BAM-Leuchtstoffe aus dem BaO-MgO-Al₂O₃-System; Halophosphate; SCAP-Leuchtstoffe.

15. Markiertes Werkstück (1) umfassend
- eine Oberseite (10), die in Draufsicht gesehen einen Markierbereich (12) aufweist, und
- eine maschinenlesbare Markierung (2) in dem Markierbereich (12), die zumindest einen Leuchtstoff (3) beinhaltet,
wobei die Markierung (2) durch eine stellenweise Veränderung und/oder Abtragung der Oberfläche (10) gebildet ist und der Leuchtstoff (3) entsprechend der Veränderung und/oder Abtragung in dem Markierbereich (3) vorhanden ist, und
wobei eine Strukturgröße der Markierung (2) bei 200 µm oder weniger liegt.
